Europäisches Patentamt

(19) European Patent Office

Office européen des brevets

(11) Numéro de publication : **0 084 917**
**B1**

(12) **FASCICULE DE BREVET EUROPÉEN**

(45) Date de publication du fascicule du brevet :
23.12.87

(21) Numéro de dépôt : **83200096.2**

(22) Date de dépôt : **22.01.83**

(51) Int. Cl.⁴ : **D 21 J   1/16**, E 04 C   2/16

(54) **Procédé de fabrication de panneaux isolants et machine destinée à réaliser le procédé.**

(30) Priorité : **26.01.82 LU 83899**

(43) Date de publication de la demande :
**03.08.83 Bulletin 83/31**

(45) Mention de la délivrance du brevet :
**23.12.87 Bulletin 87/52**

(84) Etats contractants désignés :
**AT BE CH DE FR GB IT LI NL SE**

(56) Documents cités :
**DE-C-   569 463**
**FR-A-   342 735**
**FR-A-   873 682**
**FR-A- 1 002 294**
**FR-A- 1 018 408**
**FR-A- 2 146 883**
**GB-A- 1 275 042**
**US-A- 2 415 244**
**CHEMICAL ABSTRACTS, vol. 77, 1972, pages 108-
109, no. 116302u, Columbus, Ohio, US**

(73) Titulaire : **S.A. TERRE ENGINEERING**
**Parc Industriel des Hauts-Sarts**
**B-4400 Herstal (BE)**

(72) Inventeur : **Wauters, William**
**Place Communale 1**
**B-4470 Liège (BE)**

(74) Mandataire : **Dellicour, Paul**
**Office de Brevets E. Dellicour rue Fabry 18/012**
**B-4000 Liège (BE)**

EP 0 084 917 B1

Jouve. 18. rue St-Denis. 75001 Paris. France

## Description

La présente invention est relative à la fabrication de panneaux isolants en utilisant des déchets de différentes natures, qui se trouvent généralement à la disposition à peu de frais.

Il est connu par le brevet FR-A-2 146 883 de fabriquer des panneaux à partir d'un mélange d'un composé fibreux et d'un composé minéral, ce composé fibreux étant cité en complément au composé minéral. Suivant ce brevet on travaille avec une boue ou un effluent de papeterie, d'une teneur en matières solides de 5 % à 30 % en poids, afin de contenir un maximum de minéraux.

Le brevet FR-A-1 002 294 prévoit l'incorporation dans une pâte à papier très grasse de fibres végétales diverses, notamment sous forme de pâtes fibreuses maigres provenant de bois ou plantes annuelles, ou de fibres minérales, de sciure de bois ou analogues ou de poudres minérales. Suivant ce brevet encore on utilise des résines quelconques pour améliorer l'agglomération.

Par le brevet DE-C-569 463 il est encore connu de réaliser des articles façonnés avec une pâte composée de cellulose, de goudron et ici aussi de charges minérales.

Suivant l'invention il a paru avantageux de réaliser par un procédé relativement simple des panneaux particulièrement isolants et légers en éliminant tout composé minéral, en conservant dans le mélange lors du pressage le plus d'eau possible, en ne travaillant ni à chaud, ni à forte pression.

Le procédé de fabrication suivant l'invention d'un panneau isolant, thermique et acoustique, constitué de vieux papiers et de déchets textiles, est caractérisé en ce qu'il consiste à réaliser à partir de papiers mêlés une pâte à papier contenant 4 % à 5 % de matières solides, à découper et à broyer à sec les déchets textiles, à amener par soufflage les déchets textiles broyés dans ladite pâte à papier en réalisant un mélange homogénéisé, et ensuite à constituer le panneau par une opération de préformage à une pression de l'ordre de 1 kg/cm².

Le panneau est réalisé suivant le procédé en une seule opération de mise en forme à très basse pression par une machine préformeuse suivant l'invention, caractérisée en ce qu'elle est constituée par un caisson à paroi mobile, jouant le rôle de moule et coulissant pour venir entourer une grille rapportée, et par un plateau de presse actionné par des vérins et dont la course est calibrée de façon à assurer une épaisseur constante du gâteau de pâte déposé sur une tôle perforée, disposée sur la grille rapportée à l'intérieur du caisson mobile. Suivant l'invention ladite tôle est perforée à environ 25 %.

Des panneaux réalisés suivant ce procédé et sur une telle machine préformeuse se caractérisent par des qualités exceptionnelles d'isolation thermique et phonique, à côté d'un coût de matières de récupération assez bas et d'une fabrication simple et rapide dans une machine de conception relativement peu coûteuse.

La machine préformeuse est destinée à mettre en forme les panneaux en éliminant approximativement les 4/5 de la totalité de l'eau contenue dans le mélange de base.

L'invention est exposée plus en détail ci-après à l'aide de dessins annexés, dans lesquels :

Figure 1 représente le schéma de principe d'une chaîne de production de panneaux isolants réalisés conformément à la présente invention.

Figure 2 représente une machine préformeuse destinée à la fabrication des panneaux isolants.

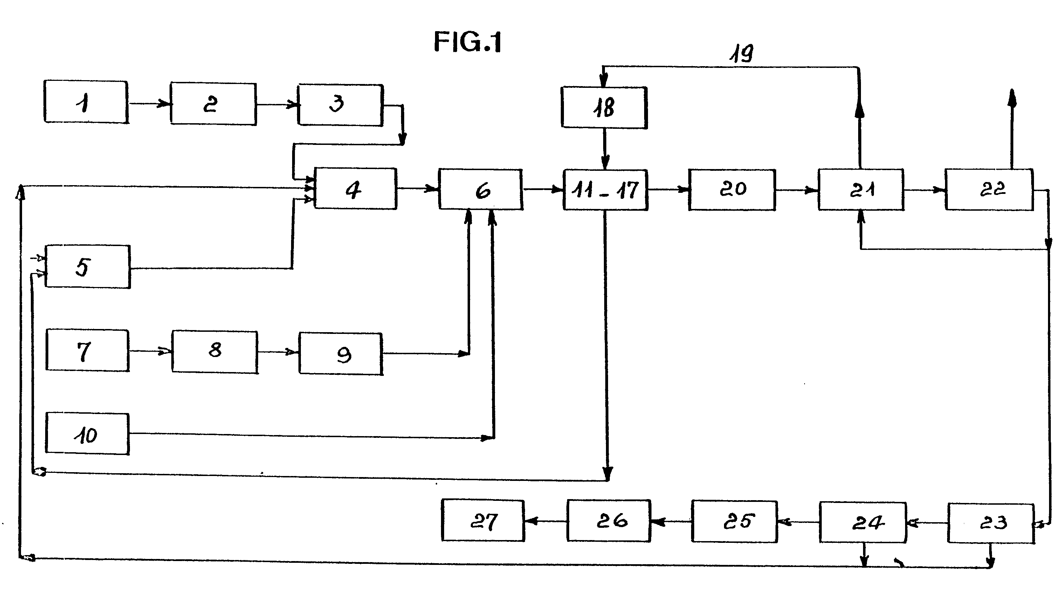

Le schéma de principe de la chaîne de production de panneaux isolants est représenté à la figure 1. Après un tri sommaire du papier mêlé 1 issu de récoltes sélectives pour éliminer la partie visible de déchets contenus dans le papier (maximum 1 % en poids), le papier mêlé peut être mis. en ballots par une presse multi densité 2. Un stockage tampon des ballots est réalisé en 3. Les ballots sont prélevés du stock et les papiers sont introduits dans un pulpeur conventionnel 4 alimenté en eau à partir de la réserve 5. Cette réserve est alimentée en partie par le réseau et en partie par l'égouttage provenant de la machine préformeuse, qui sera décrite plus loin. Des déchets provenant de la découpe et du languettage des panneaux peuvent être également introduits dans le pulpeur 4.

Dans le pulpeur 4 on réalise une pâte contenant 4 % à 5 % de matières sèches. Une fois homogénéisée, cette pâte est introduite dans un cuvier 6 où elle est agitée continuellement.

Parallèlement au tri du papier, on réalise un tri des vêtements en 7. Pour l'usage envisagé, on ne sélectionne que les vêtements qui ne peuvent être recyclés tels quels : vêtements déchirés ou déchets de couture.

Il n'y a pas de tri quant aux matières des vêtements, qu'elles soient synthétiques, végétales ou animales. Les déchets sont découpés en 8 et broyés dans un broyeur 9 avec un tamis ayant des perforations de 8 mm × 8 mm. Le textile broyé est amené par soufflage dans le cuvier 6, où la teneur en fibres peut atteindre de 5 % à 45 % du total des matières sèches.

Divers produits chimiques, décrits plus loin, sont préparés en 10 et introduits dans le cuvier 6. Une fois le mélange homogénéisé, la pâte est prête pour le préformage.

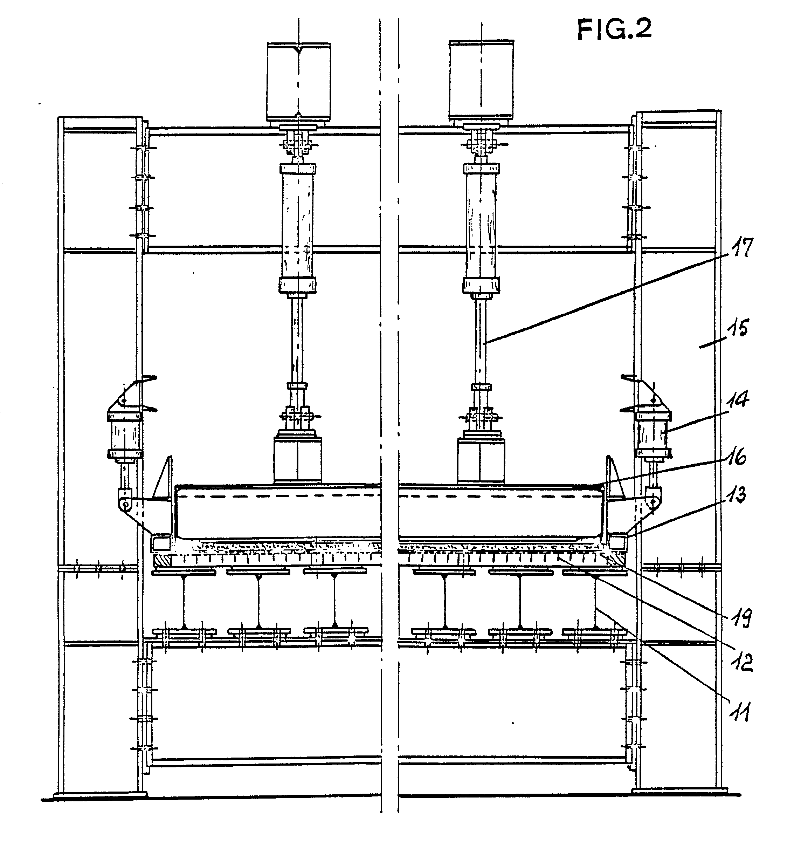

La figure 2 représente l'appareillage ou machine préformeuse comprenant un bâti rigide constitué de poutrelles 11, qui supportent une grille rapportée 12. Au-dessus de celle-ci vient s'agencer un cadre mobile 13 lui-même actionné par deux vérins 14. Le cadre mobile coulisse le long de quatre colonnes 15 et peut venir entourer la grille rapportée 12.

Le plateau 16 de la machine préformeuse est actionné par quatre vérins 17 et sa course est calibrée de façon à assurer une épaisseur constante du gâteau de pâte déposé sur la grille à l'intérieur du cadre mobile.

Une tôle perforée à 25 % prélevée d'une réserve 18 est amenée à la machine préformeuse sur la grille rapportée 12 (figure 2). Le cadre mobile 13 descend, emprisonnant les côtés de la tôle perforée 19 et de la grille rapportée 12. Une quantité mesurée de pâte est amenée sous pression sur la tôle perforée 19, où elle s'égoutte naturellement. Un opérateur surveille l'opération et peut éventuellement niveler la pâte.

Ensuite, le plateau 16 (figure 2) descend et s'arrête automatiquement dès que la dimension requise est atteinte avec une pression de l'ordre de 1 kg/cm². Le cadre mobile 13 remonte et de l'air sous pression est injecté dans le plateau 16 pour faciliter le décollement de la partie supérieure du panneau. Le plateau 16 remonte et le panneau est acheminé par un moyen approprié sur l'appareil de déchargement 20, qui dépose ensuite les panneaux sur les claies d'un chariot de séchage 21.

Les chariots de séchage chargés chacun d'une vingtaine de panneaux sont introduits au fur et à mesure dans un four 22, où la température atteint 150 °C. Une fois refroidis, les panneaux sont déchargés et les chariots avec les tôles perforées 19 retournent à leur point de départ 21, 18. Les panneaux sont ensuite découpés en 23 à la mesure désirée, puis éventuellement languettés en 24 (rainure et languette sont prévues de façon à éviter les ponts thermiques), d'où les déchets sont acheminés au pulpeur 4. En 25 sont réalisés les différents traitements de surface. On passe ensuite à l'emballage 26 et au stockage 27.

Tel que réalisé dans la chaîne décrite ci-dessus, le panneau présente les caractéristiques suivantes :

a) densité : ⩽ 250 kg/m³

b) λ conductivité thermique : ⩽ 0,070 W/mK

c) R affaiblissement acoustique à 4 000 Hertz R ⩽ 30 dB si e = 0,03 m

d) α coefficient d'absorption phonique pour 4 000 Hertz α ⩾ 60 %.

Des traitements sont prévus pour lui conférer des propriétés intéressantes :

1) ignifuge : soit en surface, soit par traitement dans la masse, soit par une combinaison des deux.

Ainsi le panneau atteint les classifications M1 ou M2 suivant les cas (NFP 92-501).

2) hydrofuge : pose d'un pare-vapeur.

3) imputrescible et fongicide : traitement dans la masse par un fongicide à base de polychlorophénols d'amines grasses à longues chaînes carbonées.

La production de panneaux isolants suivant l'invention peut être réalisée en continu. Elle requiert alors le remplacement de la machine préformeuse 11-17 par un train de papeterie, modifié de façon à assurer de très basses pressions, une vitesse de défilement lente et une modification du four 22 pour assurer un défilement en continu des panneaux.

## Revendications

1. Procédé de fabrication d'un panneau isolant, thermique et acoustique, constitué de vieux papiers et de déchets textiles, caractérisé en ce qu'il consiste à réaliser à partir de papiers mêlés une pâte à papier contenant 4 % à 5 % de matières solides, à découper et à broyer à sec les déchets textiles, à amener par soufflage les déchets textiles broyés dans ladite pâte à papier en réalisant un mélange homogénéisé, et ensuite à constituer le panneau par une opération de préformage à une pression de l'ordre de 1 kg/cm².

2. Procédé de fabrication suivant la revendication 1, caractérisé en ce qu'il comporte les étapes suivantes :

le tri sommaire des vieux papiers (1) ;

le déchiquetage des papiers et la réalisation de la pâte à papier (4) ;

le tri des déchets textiles et leur broyage à sec (7-9), leur addition à la pâte à papier (5) ;

le préformage dans un moule en une seule opération (11-17) ;

le démoulage et le séchage dans un four (22) ;

le revêtement du panneau (25).

3. Machine préformeuse destinée à réaliser l'opération de préformage du procédé suivant les revendications 1 et 2, caractérisée en ce qu'elle est constituée par un caisson à paroi mobile (13), jouant le rôle de moule et coulissant pour venir entourer une grille rapportée (12), et par un plateau de presse (16) actionné par des vérins (17) et dont la course est calibrée de façon à assurer une épaisseur constante du gâteau de pâte déposé sur une tôle perforée (19), disposée sur la grille rapportée (12) à l'intérieur du caisson mobile (13).

4. Machine préformeuse suivant la revendication 3, caractérisée en ce que la tôle (19) est perforée à environ 25 %, de façon à assurer un état de surface régulier au panneau tout en permettant l'évacuation de l'eau.

## Claims

1. Method of manufacturing a thermal and sound insulating panel consisting of old pieces of paper and textile waste material, characterised in that a paper paste containing 4 to 5 % solid material is formed from mixed paper items, the textile waste material is cut up and crushed in the dry condition, the crushed textile waste material is fed by blowing into the paper paste to form a homogenized mixture and the panel is then formed by a preforming operation at a pressure of the order of 1 kg/cm².

2. Method of manufacture according to claim 1, characterised in that it comprises the following stages :

the rough sorting of the old pieces of paper (1), the shredding of the pieces of paper and the forming of the paper paste (4),

the sorting of the textile waste material, its crushing in the dry condition (7-9), and adding it to the paper paste (5), preforming in a mould in a single operation (11-17),

removal from the mould and drying in a stove (22) and

the lining of the panel (25).

3. Preforming machine designed to carry out the preforming operation of the method according to claims 1 and 2, characterised in that it consists of a unit with moving wall (13) which is used as a mould and which slides so as to surround an associated grid (12) and of a press plate (16) operated by jacks (17) and the stroke of which is calibrated so as to ensure a constant thickness of the paste cake deposited on a piece of perforated sheet metal (19) arranged on the associated grid (12) inside the moving unit (13).

4. Preforming machine according to claim 3, characterised in that approximately 25 % of the piece of sheet metal (19) is perforated in such a way as to ensure that the panel has a regular surface condition, whilst enabling the water to be removed.

**Patentansprüche**

1. Verfahren zur Herstellung einer thermisch und akustisch isolierenden Platte, welche aus Altpapieren und Kleiderabfällen besteht, dadurch gekennzeichnet, daß man ausgehend von den vermischten Papieren einen Papierbrei mit einem Feststoffgehalt von 4 % bis 5 % herstellt, daß die Kleiderabfälle zerschnitten und trocken vermahlen werden, daß die vermahlenen Kleiderabfälle durch Blasen in den Papierbrei gebracht werden, wobei eine homogenisierte Mischung hergestellt wird, und daß anschließend die Platte durch einen Vorformschritt bei einem Druck von größenordnungsmäßig 1 kg/cm² hergestellt wird.

2. Herstellungsverfahren nach Anspruch 1, dadurch gekennzeichnet, daß es folgende aufeinanderfolgende Schritte aufweist :

Summarisches Sortieren der Altpapiere (1) ;

Zerkleinern der Papiere und Herstellen des Papierbreis (4) ;

Sortieren der Kleiderabfälle und trockenes Vermahlen (7-9) derselben, Hinzufügen zu dem Papierbrei (5) ;

Vorformung in einer Form in einem einzigen Arbeitsschritt (11-17) ;

Herausnehmen aus der Form und Trocknen in einem Ofen (22) ;

Beschichtung der Platte (25).

3. Vorform-Maschine zur Durchführung des Vorformschrittes des Verfahrens nach Anspruch 1 oder 2, dadurch gekennzeichnet, daß sie aufweist : einen Kasten mit beweglicher Wand (13), welcher die Aufgabe der Form erfüllt und so verschiebbar ist, daß er ein als unabhängiges Teil ausgebildetes Gitter (12) umgibt, sowie eine durch Arbeitszylinder (10) betätigte Pressenplatte (16), deren Hub derart kalibriert ist, daß eine konstante Dicke des Breikuchens gewährleistet ist, welcher auf einem Lochblech (19) abgelegt wird, das seinerseits im Inneren des beweglichen Kastens (13) auf dem als unabhängiges Teil ausgebildeten Gitter (12) angeordnet ist.

4. Vorform-Maschine nach Anspruch 3, dadurch gekennzeichnet, daß das Lochblech (19) zu etwa 25 % durchbrochen ist, so daß man einen ebenmäßigen Oberflächenzustand an der Platte erhält, wobei gleichzeitig aber Wasser abgeführt werden kann.

# FIG.1

0 084 917

FIG.2